# EUROPEAN PATENT APPLICATION

(11) **EP 2 523 388 A1**
(43) Date of publication of application: **14.11.2012**
(21) Application number: 10841890.6
(22) Date of filing: 08.01.2010
(51) Int. Cl.: H04L 12/14

(54) **METHOD AND DEVICE FOR NOTIFYING ACCOUNT INFORMATION ORIENTED TO DATA-TYPE TERMINAL**

(71) Applicant: Alcatel Lucent, 75007 Paris (FR)
(72) Inventor: LI, Xiangyang, Beijing 100193 (CN); HU, Yongpei, Beijing 100102 (CN)
(74) Representative: Hervouet, Sylvie
(86) International application number: PCT/CN2010/070092
(87) International publication number: WO 2011/082546

(57) **Abstract**

The invention discloses a method of and apparatus for notifying account information of a data-type-oriented user equipment. The method comprises the steps of: determining whether each user satisfies a predetermined condition; and if the predetermined condition is satisfied, then causing a packet data network gateway to activate account information notification control information for the user, wherein the account information notification control information includes a network address of a web notification server. With the invention, the terminal user can get to know his own account information more timely to thereby adjust the usage mode of the wireless broadband data service according to the account information, for example, lower the frequency of accessing the service or disable the service for a duration to thereby avoid a large bill or perform prepayment charging to thereby prevent an important connection from breaking down due to an overdue account. An operator and a service provider can improve the user experience of the wireless broadband data service to thereby reduce the the complaint of the user and avoid the loss of customers in the field of wireless broadband data services. In the inventive method, good compatibility with other types of user equipments is possible while offering the new function.

## Description

### Field of the invention

The present disclosure relates to the notification of account information and particularly to a method and apparatus for notifying account information of a data-type-oriented user equipment in a packet data network.

### Background of the invention

As reported by GSMA, the number of wireless broadband connections throughout the world has reached one hundred million by February 2009, which indicates the popularity of wireless broadband data services throughout the world. The wireless broadband data card service allows the user to access wireless broadband data (e.g., the Internet, a web-based email, etc.) through a personal computer, a laptop device, etc.

One tariff plan mode for the wireless broadband data card service is as follows. For example, a user pays a certain amount of monthly data tariff for a preset monthly data allowance (amount of data), e.g., 5G bytes, and once the monthly data allowance of the user is reached, the data tariff mode is switched to per megabyte (MB) overage tariff, e.g., ¥ 0.25/ MB, which means the user has to pay extra ¥ 256 for additional 1GB data access after 5GB data allowance threshold is reached. As users become increasingly dependent upon wireless data, they are now complaining about the fact that they are unaware of how their usual browsing and roaming behavior are translated into data service fees. This can be evidenced by recent European Union (EU) regulations designed to protect users while roaming, and the recent class-action lawsuit in North America between users and their service provider.

For a traditional circuit-switching based telecommunication network, the charging system can provide the user with a real-time voice announcement or SMS notification before/during voice communication session. For example, the online charging system can provide such a voice announcement as "your remaining balance has XX Yuan" to a user before the user makes through the call; and in another example, the online charging system can further send a voice notification to the user when the balance of the user reaches the low balance threshold. Thus the user can get real-time knowledge of the expense of the session, the remaining balance and other information, and then can further decide a subsequent operation mode based upon the information.

As the communication network is switching to the packet data network, the user equipments primarily intended for data service (i.e., a notebook computer, a desktop computer, etc.) may not support the voice or SMS notification mode. However, the users of these user equipments are eager to know their account information. Because the data tariff is generally high, it is very likely for the users to receive a bill surprising them once the threshold of monthly, quarterly or annual amount of data is exceeded. Currently, since a feasible and effective solution has been absent so far, these users come to be careful with the usage of the data service, and an increasing number of users turn to deregistration of their subscribed wireless broadband data services, thus posing an emerging challenge to operators and service providers.

### Summary of the invention

In view of the foregoing problem, according to an embodiment of the invention, there is provided a method, in an online charging device, of notifying account information of a data-type-oriented user equipment. The method comprises the steps of: a. determining for each user whether the user satisfies a predetermined condition; and b. if the user satisfies the predetermined condition, transmitting an activation command to a packet data network gateway to which a user equipment of the user belongs so that the packet data network gateway activates account information notification control information for the user, wherein the account information notification control information includes a network address of a web notification server; and the method further includes the steps of: receiving an account information request from the web notification server, the account information request being used for requesting account information of the user; and providing the web notification server with the account information of the user.

Furthermore the step a comprises: determining that the predetermined condition is satisfied when a user satisfies at least one of the following conditions:
- the user equipment of the user requests a connection to the packet data network gateway in an initialization process;
- the amount of data traffic consumed by the user in a past first duration is above or equal to a first predetermined threshold; and
- the amount of data traffic consumed by the user in a past second duration is above or equal to a second predetermined threshold.

Furthermore when the predetermined condition is satisfied because the user equipment of the user is connected to the packet data network gateway in the initialization process or the amount of data traffic consumed by the user in the past first duration is above or equal to the first predetermined threshold, after the step of controlling the user equipment to be connected with a web notification server to perform a web-based account information notification, the method further comprises the steps of: determining whether the web notification server reports its completion of an operation of notifying the account information to the user; and if the web notification server reports its completion of the operation of notifying the account information to the user, then transmitting a deactivation command to the packet data network gateway so that the packet data network gateway deactivates the account information notification control information for the user.

Furthermore the account information notification control information corresponds to a first set of data services, and after the packet data network gateway activates the account information notification control information for the user, if the user requests an access to any of data services in the first set of data services, then the packet data network gateway will control the user equipment of the user to be connected to the web notification server to perform a web-based account information notification.

According to another embodiment of the invention, there is provided a method, in a packet data network gateway, of notifying account information of a data-type-oriented user equipment. The method comprises the steps of: A. receiving an activation command from an online charging device; B. activating account information notification control information for a user indicated in the activation command, wherein the account information notification control information includes a network address of a web notification server; and D. controlling a user equipment of the user to be connected with the web notification server to perform a web-based account information notification.

Furthermore the account information notification control information further corresponds to a first set of data services, and after the step B and before the step D, the method further comprises the step of: C. determining whether a data service access request message from the user equipment of the user is received, the data service access request message being used for requesting an access to at least one of data services in the first set of data services; and the step D further comprises the step of: if the data service access request message is received, then controlling the user equipment of the user to be connected with the web notification server to perform the web-based account information notification.

According to another embodiment of the invention, there is provided a method, in a web notification server, for notifying account information of a data-type-oriented user equipment. The method comprises the steps of: i. determining a user for which a web-based account information notification is needed to be performed; ii. acquiring account information of the user from an online charging control device; iii. generating a web notification page, the web notification page including the account information of the user; and iv. transmitting the web notification page to the user equipment of the user; and v. notifying the online charging device about information of completion of the account information notification upon the completion of the account information notification performed for the user equipment of the user.

According to another embodiment of the invention, there is provided a first apparatus, in an online charging device, for notifying account information of a data-type-oriented to user equipment. The first apparatus comprises: a first unit for determining for each user whether the user satisfies a predetermined condition; and a second unit for, if the user satisfies the predetermined condition, then transmitting an activation command to a packet data network gateway to which a user equipment of the user belongs so that the packet data network gateway activates account information notification control information for the user, wherein the account information notification control information includes a network address of a web notification server; and the first apparatus further comprises: a first receiving unit for receiving an account information request from the web notification server, the account information request being used for requesting account information of the user; and a third unit for providing the web notification server with the account information of the user.

Furthermore the first unit determines that a predetermined condition is satisfied when a user satisfies at least one of the following conditions:
- the user equipment of the user requests a connection to the packet data network gateway in an initialization process;
- the amount of data traffic consumed by the user in a past first duration is above or equal to a first predetermined threshold; and
- the amount of data traffic consumed by the user in a past second duration is above or equal to a second predetermined threshold.

Furthermore the first unit is further for, when the predetermined condition is satisfied because the user equipment of the user is connected to the packet data network gateway in the initialization process or the amount of data traffic consumed by the user in the past first duration is above or equal to the first predetermined threshold, determining whether the web notification server reports its completion of an operation of notifying the account information to the user; and the second unit is further for, if the web notification server reports its completion of the operation of notifying the account information to the user, then transmitting a deactivation command to the packet data network gateway so that the packet data network gateway deactivates the account information notification control information for the user.

Furthermore the account information notification control information corresponds to a first set of data services, and after the packet data network gateway activates the account information notification control information for the user, if the user requests an access to any of data services in the first set of data services, then the packet data network gateway will control the user equipment of the user to be connected to the web notification server to perform a web-based account information notification.

According to a further embodiment of the invention, there is provided a second apparatus, in a packet data network gateway, for notifying account information of a data-type-oriented user equipment. The second apparatus comprises: a second receiving unit for receiving an activation command from an online charging device; a fourth unit for activating account information notification control information for a user indicated in the activation command, wherein the account information notification control information includes a network address of a web notification server; and a fifth unit for controlling a user equipment of the user to be connected with the web notification server to perform a web-based account information notification.

Furthermore the account information notification control information further corresponds to a first set of data services, and the second apparatus further comprises: a sixth unit for determining whether a data service access request message from the user equipment of the user is received, the data service access request message being used for requesting an access to at least one of data services in the first set of data services; and the fifth unit is further for, if the data service access request message is received, then controlling the user equipment of the user to be connected with the web notification server to perform the web-based account information notification.

According to a further embodiment of the invention, there is provided third apparatus, in a web notification server, for notifying account information of a data-type-oriented user equipment. The third apparatus comprises: a seventh unit for determining a user for which a web-based account information notification is needed to be performed; an eighth unit for acquiring account information of the user from an online charging control device; a ninth unit for generating a web notification page, the web notification page including the account information of the user; and a tenth unit for transmitting the web notification page to the user equipment of the user; and the tenth unit is further for notifying the online charging device about information of completion of the account information notification upon the completion of account information notification performed for the user equipment of the user.

Furthermore the web notification page generated by the ninth unit further includes at least one of:
- contents for performing an interactive operation with the user; and
- contents for providing the user with a value-added service.

According to the embodiments of the invention, the system can prompt a terminal user to enter a password to activate the data service when the terminal user initially accesses the data service; the system can prompt a notification to the user when the accumulated amount of data approaches a monthly quota threshold; the system can prompt a notification event when there is a change to the lifetime of a subscriber account; the system can prompt a notification event to have the terminal user perform charging when the balance is used up; and so on.

With the methods and apparatuses according to the invention, the attainable technical effects include but will not be limited to:
1. A terminal user can get more timely knowledge of his own account information to thereby perform more pertinent handling of his own subsequent usage mode of the wireless broadband data service, for example, lower the frequency of accessing the service or disable the service for a duration to thereby avoid a large bill or perform prepayment charging to thereby prevent an important connection from breaking down due to an overdue account;
2. An operator and a service provider can improve the user experience of the wireless broadband data service to thereby reduce the complaint of the user and avoid the loss of customers in the field of wireless broadband data services; and
3. Good compatibility with other types of user equipments is possible while offering the new function.

### Brief description of drawings

Other features and advantages of the invention will become more apparent from the following description of at least non-limiting embodiment of the invention with reference to the drawings in which:
Fig.1 illustrates a network architecture for notifying account information of a data-type-oriented user equipment according to an embodiment of the invention;
Fig.2 illustrates a flow chart of a method of notifying account information according to a first embodiment of the invention and a corresponding web notification page;
Fig.3 illustrates a flow chart of a method of notifying account information according to a second embodiment of the invention and a corresponding web notification page;
Fig.4 illustrates a flow chart of a method of notifying account information according to a third embodiment of the invention and a corresponding web notification page;
Fig.5 illustrates a structural diagram of a system according to an embodiment of the invention;
Fig.6 illustrates a schematic diagram of a web notification page for notifying account information, which is displayed at a user equipment according to an alternative embodiment of the invention;
Fig.7 illustrates a block diagram of a first apparatus, in an online charging device, for notifying account information of a data-type-oriented user equipment according to an embodiment of the invention;
Fig.8 illustrates a block diagram of a second apparatus, in a packet data network gateway, for notifying account information of a data-type-oriented user equipment according to an embodiment of the invention; and
Fig.9 illustrates a block diagram of a third apparatus, in a web notification server, for notifying account information of a data-type-oriented user equipment according to an embodiment of the invention.

Identical or like reference numerals denote identical or like technical features throughout the drawings.

### Detailed description of embodiments

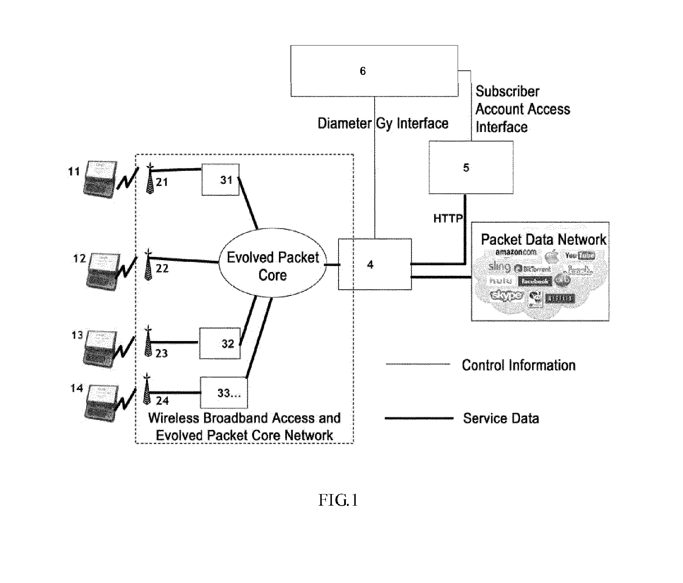

Nonrestrictive embodiments of the invention will be introduced below with reference to the drawings. Fig.1 illustrates a typical application scenario of the invention, and for the sake of conciseness, there are only illustrated four user equipments (UEs) 11-14, access devices 21-24 which respectively provide access for these UEs and control devices 31-33 which are on the upper layer of the respective access devices. Fig.1 further illustrates a Packet Data Network Gateway (PDN-GW, hereinafter referred to as a gateway) 4, a web notification server (hereinafter referred to as a notification server) 5 and an online charging device 6. Wherein the online charging device 6 performs the function of an online charging system and the two concepts of an online charging device and an online charging system will not be distinguished from each other in this context.

Wherein the online charging device 6 is provided with a Diameter Gy interface for interaction with the gateway 4 and a user account access interface for interaction with the notification server 5, and the gateway 4 communicates with the packet data network and the server 5 in the HTTP protocol.

Without loss of generality, the user equipment 11 is a GPRS or UMTS device connected to an evolved packet core via the NodeB 21 and the radio network controller 31; the user equipment 12 is an LTE device connected to the evolved packet core via an eNodeB; the user equipment 13 is a 3G1X/HRPD device connected to the evolved packet core via a BTS and a DoRND; and the user equipment 14 is a terminal device based upon other technologies, e.g., WiMax, WiFi, etc., and connected to the evolved packet core via an appropriate access device.

Those skilled in the art shall appreciate that the scenario illustrated in Fig.1 is merely one of numerous scenarios to which the invention can be applicable, and besides, the description in this context presented with reference to the drawings and embodiments shall be construed as a nonrestrictive detailed introduction of the invention but not limiting the scope thereof. For example, although the signaling mentioned below is generally taken from the Diameter protocol, those skilled in the art can apply the inventive idea to the network environment adopting another protocol upon review of the specification without any inventive effort.

At lease one embodiment of the invention provides an innovative solution in which account information is notified by transmitting a web notification page to a user equipment. With the web-based notification server 5, the user experiences that can be provided to the user include but are not limited to:

### 1. the web-based account information notification function

The currently applied tariff of the user is notified to him/her in the web notification page;

The remaining balance of the tariff and the statistics of usage of the tariff are notified to him/her in a web notification page; and

The usage of the data service by the user (for example, the amount of consumed data has reached a certain predetermined threshold or spending limit) and the possible tariff change are notified to him/her in a web notification page.

### 2. the web-based user interaction function

The user is provided with some links of corresponding functions in the web notification page, for example, the user can buy a new service package by clicking one link (for example, 300MB data allowance with ¥ 5 within two days' validity period);

The user can extend his/her current data session based upon the service advice in the web notification page when the preset threshold is reached; and

Password-based security guarantee can be provided for the data session of the user in the web notification page, for example, the user is prompted to enter the PIN code to prevent other users from maliciously occupying resources related to his/her data service through a Trojan horse.

### 3. the web-based value-added service function

The operator can further add some useful links in the web notification page presented to the user besides essential notification and user interactive functions such that the user can click to download music from the list provided by the operator. Furthermore some advertisement information can further be added in the web-based notification page that is transmitted to the user equipment, and such advertisement information is preferably based upon the agreement between the user and the operator to thereby avoid the complaint. For example, the operator can provide the user with bonus/discount of some data services, and in return the user shall agree to accept advertisement information in the web-based notification page he/she receives.

The key of the invention lies in that the problem that a personal computer or like can not receive in real time a voice or SMS notification, from which the user equipment has suffered for a long time, is addressed based on a web-based account information notification. According to an embodiment of the invention, the online charging device 6 determines for a user that a predetermined condition is satisfied and then instructs a gateway to which a user equipment of the user belongs to activate account information notification control information for the user. Without loss of generality, such a predetermined condition can be any one of the following conditions: the user equipment of the user requests a connection to the (packet data network) gateway in an initialization process; the amount of data traffic consumed by the user in a past first duration is above or equal to a first predetermined threshold; and the amount of data traffic consumed by the user in a past second duration is above or equal to a second predetermined threshold.

The concepts of the "user" and the "user equipment" will reoccur frequently in this context, where the "user" refers particularly to an object to which the account corresponds, typically a person or an enterprise; and the "user equipment" refers particularly to a specific electronic terminal device used by the user, for example, a notebook computer, a desktop computer, etc. Of course the two concepts will not be specifically distinguished from each other in this context without any confusion.

Embodiments of the invention will be introduced below with reference to specific flow charts and in connection with the foregoing several predetermined conditions.

### First Embodiment: the predetermined condition is satisfied because the user equipment requests a connection to the gateway in an initialization process

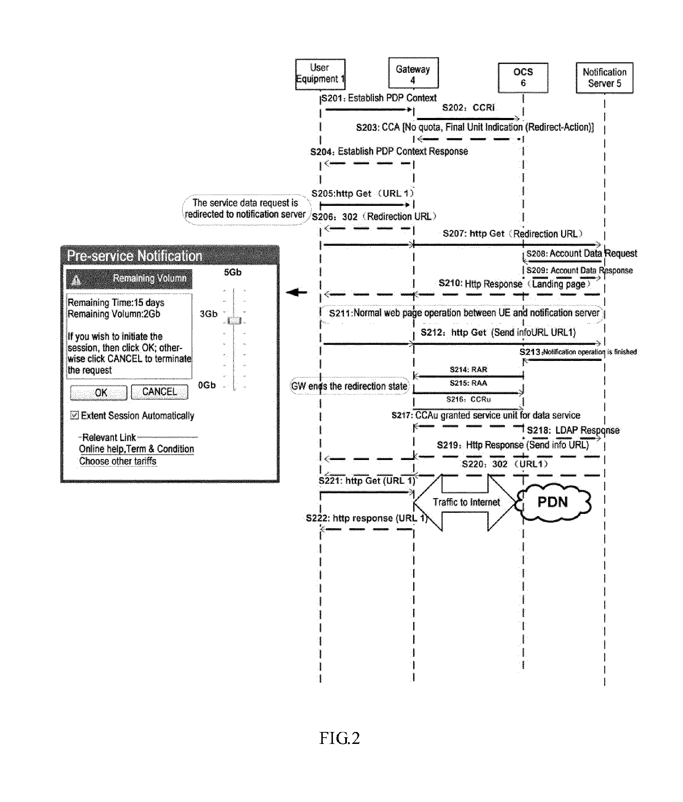

Referring to Fig.2, it illustrating a flow of a method of notifying account information according to a first embodiment and a corresponding web notification page. Firstly a user (Mr. Zhang) starts up his user equipment 11, e.g., a notebook computer, and the user equipment 11 will generate a data session establishment request in response to an input operation of Mr. Zhang and transmit it to the gateway 4 to request establishment of a connection with the gateway 4. Particularly in the Diameter protocol, the request is an Establish PDP Context request.

Next in Step S202, the gateway 4 generates a Diameter CCRi (Credit Control Request initial) message for Mr. Zhang and transmits it to the online charging device 6 to verify the validity of the user.

In this example, upon reception of the CCRi from the gateway 4, the online charging device 6 determines that a predetermined condition is satisfied, or the online charging device 6 firstly checks account setting information of Mr. Zhang based upon the CCRi message and then determines that the predetermined condition is satisfied. Since the request previously transmitted from the user equipment 11 includes characteristic information of Mr. Zhang (for example, the request arrives at the gateway 4 via a physical port bound with Mr. Zhang or the request carries identity information), the online charging device 6 can determine that the user of Mr. Zhang satisfies the predetermined condition and thereby perform pertinent triggering of the subsequent operation.

Upon determining that the predetermined condition is satisfied, the online charging device 6 returns a CCAi (Credit Control request response) message to the gateway 4 in Step S203, and this CCAi message is a specific example of the activation command in the invention. In the CCAi message, the online charging device 6 writes the following sub-AVPs into an Attribute Value Pair (AVP) named Multi-Service Credit Control to perform a web-based account information notification prior to commencement of the data service requested by Mr. Zhang:
A) The Granted Service Unit=0; and
B) The Final-Indicate-Unit, which includes a Final-Unit action as a redirection action and a Redirection URL address, where the Redirection URL address is the network address of the notification server 5.

The foregoing information A) and B) is included in the account information notification control information to be activated by the gateway 4 for Mr. Zhang, and the gateway 4 can control the user equipment 11 to be connected to the notification server 5 indicated in the Final-Indicate-Unit immediately after activating the information. A more preferable embodiment will be detailed below.

Furthermore CCAi can further include the following sub-AVP:
C) The Rating-Group, which is used to indicate which type of data services shall be redirected to the notification server 5, and a set composed of these data services will also be referred to as the first set of data services in this context. Then the activated account information notification control information corresponds accordingly to the first set of data services.

The Rating-Group can be omitted in CCAi, and when this item of information is omitted, the gateway 4 assumes by default that the access request for any type of data service shall be redirected, that is, all the data services belong to the first set of data services.

Furthermore CCAi can further include the following sub-AVP:
D) The Validity-Time, which is used to indicate the time period for which the gateway 4 waits for a data service request from the user equipment 11. If no data service request is received from the user equipment 11 before the Validity-Time expires, then the redirection of data service access request will not be performed for Mr. Zhang any more. Then the activated account information notification control information further includes this Validity-Time.

The Validity-Time can also be omitted in CCAi, and for example, the gateway 4 can store a predetermined static or quasi-static value as a default value of Validity-Time, and this default value is typically finite. Of course it can also be set to be infinite without departing from the scope of the invention.

It shall be noted here that for the gateway 4, both the network address of the notification server 5 and the Rating-Group may be temporally invariable to some extent, therefore after acquiring the network address of the notification server 5 and the Rating-Group from the CCAi, the gateway 4 can store these information and will not require such information from the online charging system 6 for a subsequent considerable duration. In view of this, the CCAi in Step S203 can include no specific indicative information, but the gateway 4 shall be configured to activate pre-stored account information notification control information for a corresponding user upon reception of such CCAi (an activation command).

After Step S203, the gateway 4 initiates a timer with a duration being the Validity-Time and monitors whether the user requests the data service indicated in the Rating-Group in this duration, that is, activates the account information notification control information for Mr. Zhang, based upon the received CCAi message. Also the PDN gateway will returns an "Establish Bearer Session Response" to the user equipment 11, and the gateway 4 can know that the user equipment 11 has been connected therewith successfully.

Mr. Zhang initiates an access request for a data service through the user equipment 11 at a certain time after the user equipment 11 establishes the foregoing connection with the gateway 4. For example, in Step S205, Mr. Zhang initiates the data service on the user equipment 11, for example, by clicking a link of playing an online video, and then the user equipment 11 generates and transmits an "http Get (URL1)" message to the network side. This message is an example of the data service access request, where URL1 is the network address of the multimedia server providing the online video. The "http Get (URL1)" message is routed to the gateway 4 over the access network. The gateway 4 detects the data service access request, and in this example, the data service belongs to the first set of data services indicated in the CCAi, that is, it falls into the Rating-Group to be redirected.

Based upon the foregoing determination, the gateway 4 will generate and transmit an "http 302 (Redirect URL)" message to the user equipment 11 in Step S206, where the portion of "Redirection URL" is the network address of the notification server 5. Note that notification services corresponding to different types of data services to be redirected may or may not be the same without departing from the scope of the invention, so only such a scenario will be described below that respective data services falling into the first set of data services correspond to the notification server 5. Wherein Mr. Zhang originally requested an access to the online video server, but the user equipment 11 is finally connected to the notification server instead of being connected directly to the video server, which will also be referred to as redirection in this context.

In Step S207, the user equipment 11 generates an "http Get (Redirection URL)" request message based on the "http 302 (Redirection URL)" message and transmits it to the gateway 4. Since the "Redirection URL" therein is the network address of the notification server 5, the gateway 4 thereby knows that the "http Get (Redirection URL)" shall be forwarded to the notification server 5 and performs the corresponding forwarding operation.

The notification server 5 ascertains that the user for which the account information notification is to be performed is Mr. Zhang upon reception of the request from the user equipment 11, and then transmits an account information request to the online charging system 6 to acquire account information of Mr. Zhang in Step S208.

In next Step S209, the online charging system 6 returns the account information of Mr. Zhang to the notification server 5. In this example, the subscription information of the bound package of Mr. Zhang is returned, where the package of this month has a data quota (or a data allowance) of 5GB, and 3GB has been consumed with 2GB remaining, and the remaining duration for the traffic statistic of the package this month is 15 days. "This month" in this context refers to the month of the traffic statistic unless stated otherwise. If there are 30 days per month, then 15 days have elapsed this month, and in the following examples, the elapsed 15 days this month are a so-called first duration. The user can customize his desirable account information notification mode, and this customization will be reflected in the account information that is provided to the notification server by the online charging device 6 and in the web notification page that is finally presented to the user by the account server 5.

The notification server 5 constructs a web notification page in Step S210 upon acquisition of the account information of Mr. Zhang. The web notification page includes the account information of Mr. Zhang, and preferably the account information presented therein is strongly real-time. For example, the account information at a time T1 may differ from that at a time T2, and this is typically reflected in the usage of the package. The notification server 5 returns to the user equipment 11 the "Http Response" message which includes the constructed notification page, and then the page as illustrated on the left of Fig.2 will be popped up on the screen of the user equipment 11. Wherein the title indicates that this is a pre-service notification, because in fact the user equipment 11 has not accessed the online video service so far since it is powered on. The web notification page further reflects the following information: the data quota of the user this month is 5GB, the amount of consumed traffic in this month is 3GB with 2GB remaining, and there are 15 days remaining now till the end of this month.

Preferably the web notification page further provides man-machine interaction buttons and essential prompt information. Of course the web notification page illustrated in Fig.2 is merely a nonrestrictive example of the invention, and the user may perform a relevant operation (for example, click the link or like carried in the web notification page) in response to the prompt of the page after he/she sees the page. And then there are a plurality of http requests and http responses occurring between the user equipment and the notification server 5 in Step S211, thereby further accessing/updating account information on the online charging device 6. A repeated description thereof will be omitted in this example.

After Mr. Zhang performs the relevant operation, for example, the user controls the user equipment 11 to click a button "OK", and then the method goes to Step S212 where the user equipment 11 generates and transmits an "http get (send infoURL, URL1)" message to the notification server 5. This message is for the purpose of notifying the notification server 5 about the information that Mr. Zhang has finished the operation related to the web notification page.

After the notification server 5 knows that Mr. Zhang has finished the operation related to the web notification page, the notification server 5 further notifies the online charging device 6 about the successful completion of the notification process in Step S213. Optionally the online charging device 6 can automatically determine completion of the notification after waiting for a fixed duration instead of relying on the notification of the notification sever 5.

Thereafter the online charging device 6 transmits an RAR message to the gateway 4 in Step S214 to notify the gateway 4 about the completion of the notification process so that the account information notification control information can be activated for Mr. Zhang. Then when the user equipment 11 thereafter transmits again an access request for the data service in the first set of data services via the gateway 4, the gateway 4 will forward the request to the network address to which it actually points without performing the foregoing redirection.

In Step S215, the gateway 4 transmits an RAA response message to the online charging device 6.

The gateway 4 further transmits a CCRv Update Request message to the online charging device 6 to acquire an allowed quota of the originally requested data service in Step S216 after terminating the redirection status for the user.

In Step S217, the online charging device 6 grants and puts the corresponding quota into a GSU AVP of a CCAv message and returns it to the gateway 4.

Furthermore the online charging device 6 further returns a response message to the notification server 5 in Step S218 which can be performed immediately after Step S213.

In response to the request in Step S212, the notification server 5 returns an "http response (send infoURL)" message to the user equipment 11 in Step S219. Furthermore, in step S220, the notification server 5 further returns an "http 302 (URL1)" message to the user equipment 11 to instruct the user equipment 11 to reinitiate a request for the data service access request previously initiated in Step S205, where the destination address is still the foregoing address URL1 of the multimedia server.

Then the user equipment 11 generates and transmits an "http get (URL1)" message in Step S221, and this message is further forwarded to the gateway 4.

Since the gateway 4 has terminated the redirection status for Mr. Zhang, the data service access request transmitted from the user equipment 11 at this time will be forwarded to the designated address URL1. Also the gateway 4 starts to monitor the amount of data for the data service.

The gateway 4 forwards the packet data network service access response, e.g., "http response URL1" in this example, from the multimedia server to the user equipment 11 upon reception of the response.

Then the user of Mr. Zhang in the first embodiment can be provided with a notification of account information after his equipment is powered on or a more pertinent notification when he requests an access to a certain data service and can thereby select the subsequent operation.

As an alternative to the first embodiment, Step S205 can be performed as the first step of the illustrated method, followed by Step S02 and then by Step 203 and Step S206, where Steps S201 and S204 originally illustrated in Fig.2 are omitted primarily because both of them particularly apply to different network environments.

### Second Embodiment: the predetermined condition is satisfied because the amount of data traffic consumed by the user in a past first duration is above or equal to a first predetermined threshold

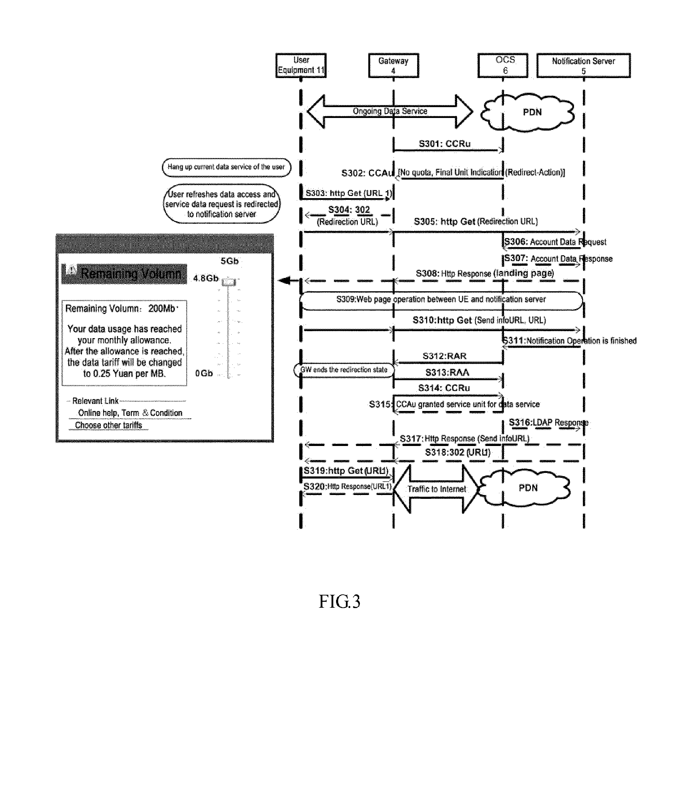

Referring to Fig.3, the account information notification process illustrated in it can be referred to as an account information notification in an ongoing session, that is, a web notification page will be popped up on the user equipment to be presented to the user when the traffic usage of the user for the data service approaches his limited quota.

Reference is made to Fig.3 illustrating a flow which may take place in a period of time after the flow illustrated in Fig.2, and at this time the user of Mr. Zhang is watching, through the user equipment 11, an online video service provided by a video server.

In the process of monitoring data service traffic of the user of the user equipment 11, in Step S301, the gateway 4 finds that Mr. Zhang has used up all the service unit granted by the online charging device 6 previously in Step S215, and then the gateway 4 generates and transmits a CCRv Request message to the online charging device 6 to request a further quota.

In Step S302, the online charging device 6 finds that the data service usage of the user indicated in the CCRv has approaches a monthly allowance, for example, the amount of data consumed by Mr. Zhang reaches or exceeds the first predetermined threshold of 4.5GB for the past first duration this month, e.g., 20 days. Then the online charging device 6 triggers the internal Diameter redirection logic and sets the CCAu message. The online charging device 6 will write the following sub-AVPs into a Multi-Service Credit Control AVP in the "CCAu" (CCA[update]) message to perform a notification of the type of the data service prior to the call:
A) The Granted Service Unit=0, which instructs the PDN gateway to keep the current service data request.
B) The Final-Indicate-Unit AVP, which includes a Final-Unit action as a redirection action and a Redirection URL address, where the Redirection URL address is the network address of the notification server 5.
C) The Rating-Group AVP, which is used to indicate which type of data traffic shall be redirected to the notification server 5.
D) The Validity-Time AVP, which is used to indicate a period of duration for which the PDN gateway waits for the data service request from the network.

Preferably after Step S302, the gateway 4 can hang up the current data service of the user equipment 11, and when the user equipment 11 attempts to refresh the data service request or to reinitiate a request to another network address automatically or in response to an input of the user, this request will be redirected to the notification server 5. In the web notification page illustrated on the left of Fig.3, the title indicates that this is a notification page during the session and also indicates that the current usage of the package has approached a threshold and particularly reflects that the current usage of traffic is 4.8GB with 200MB remaining.

Wherein the options and the like of the respective AVPs are the same as those in the first embodiment, and the repeated description thereof will be omitted. Furthermore reference can be made to the description of the steps S205 to S222 for the description of the steps S303 to S320.

When Mr. Zhang initiates a data request or starts an access to another URL through the user equipment 11, the PDN gateway keeps the current data request. The mobile user equipment initiates an "http Get (URL1)" request which is routed to the PDN gateway over the mobile access network in Step 3.

### Third Embodiment: the predetermined condition is satisfied because the amount of data traffic consumed by the user in a past second duration is above or equal to a second predetermined threshold

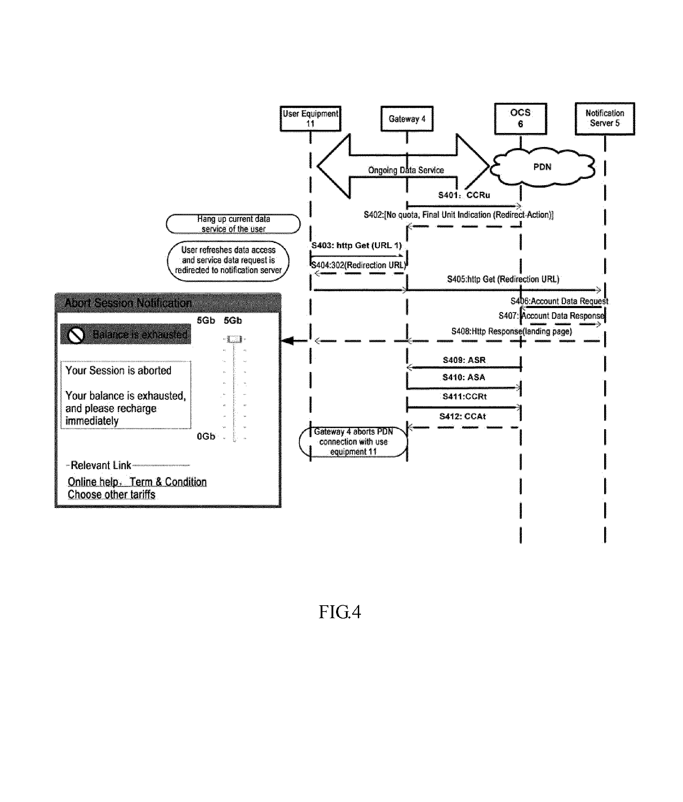

Referring to Fig.4, it illustrates a flow chart of a method of notifying account information according to a third embodiment of the invention and a corresponding web notification page.

In the step S401, the gateway 4 monitors the traffic and finds that the granted service unit has been used up, and then the gateway 4 generates and transmits a CCRv Request message to the online charging device 6 to request the further quota.

In the step S402, the online charging device 6 detects that Mr. Zhang has used up traffic of this month. In other words, with the second predetermined threshold being 5GB traffic, the amount of data traffic consumed by Mr. Zhang through user equipments including but not limited to the user equipment 11 has reached this second predetermined threshold in the last second duration, e.g., 25 days. Then the online charging device 6 determines that a predetermined condition is satisfied and thereby triggers an internal Diameter redirection logic and generates a CCAu message. The CCAu message includes the following sub-AVPs.
A) The Granted Service Unit=0, which instructs the gateway 4 to hold on the current data service of the user of Mr. Zhang.
B) The Final-Indicate-Unit, which includes a Final-Unit action as a redirection action and a Redirection URL address, where the Redirection URL address is the network address of the notification server 5.
C) The Rating-Group, which is used to indicate which type of data traffic shall be redirected to the notification server 5, that is, designate a first set of data services.
D) The Validity-Time, which is used to indicate a period of duration for which the gateway 4 waits for a data service request from the network.

Then after Step S402, the gateway 4 holds on the current data service of the user equipment 11, so Mr. Zhang cannot access the data service.

In next Step S403, when Mr. Zhang is ready to initiate a data session, the user equipment 11 initiates an "http Get (URL1)" request which is routed to the gateway 4.

In Step S404, the gateway 4 returns a "302 (redirection URL)" message to the user equipment 11 to redirect the request to the notification server 5.

In Step S405, the user equipment 11 transmits an "http Get (redirection URL)" request message which is routed to the gateway 4, and the gateway 4 knows that the "http Get (redirection URL)" is the redirected data stream and then forwards it to the notification server 5.

In Step S406, the notification server 5 then transmits an account information request to the online charging device 6 to acquire account information of the user of Mr. Zhang in response to the request of the user of Mr. Zhang.

In next Step S407, the online charging device 6 returns the account information of Mr. Zhang to the notification server 5, and in this example, the traffic of the package of Mr. Zhang this month has been used up.

Then in Step S408, the notification server 5 constructs a web notification page according to the current account information of Mr. Zhang, and this web notification page includes the account information of Mr. Zhang. Then the notification server 5 returns to the user equipment 11 an http response including the web notification page. At the user equipment 11 side, the web notification page illustrated on the left of Fig.4 is popped up to the user of Mr. Zhang.

In Step S409, the online charging device 6 transmits an End Session Request to the gateway 4 to terminate the current session; in Step S410, the gateway 4 returns an ASA message to the online charging device 6; in Step S411, the gateway 4 generates and transmits a CCRt message to the online charging device 6 to report the used service unit; in next Step S412, the online charging device 6 returns a CCAt message to the gateway 4; in final Step S413, the gateway 4 generates and transmits a bearer session abort message to the user equipment 11.

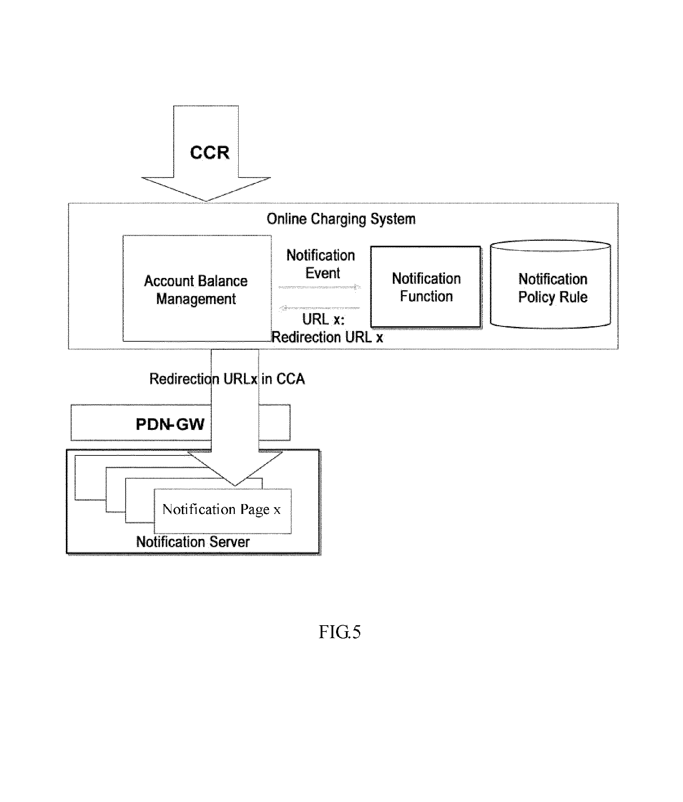

Referring to Fig.5, it illustrates a structural diagram of a general system according to an embodiment of the invention, where the online charging system includes an online charging logic, a rating logic and a balance management logic and maintains therein a large number of notification events. For each notification event X, the end user will finally be provided with a web notification page that is maintained in the notification server. This notification function in the invention provides each notification event with a policy-based web notification page determination mechanism. For example, for a notification event, an enhanced web notification page in the case of roaming will be different from that in the case of a home network and the web notification page provided to a purchaser in English language of will also be different from that provided to a purchaser in Chinese language.

In the invention, different web notification pages for a specific notification event will be determined by the following conditions, where the following list does not include all the conditions but more conditions can be extended or added as required by an end user or an operator. The online charging system sets a corresponding URL address for each notification page. The notification server acquires an indexed (retrieved) maintenance method for a web notification page based upon the URL address.
» The class of service of the subscriber
» The language of the subscriber
» The MVNO to which the subscriber belongs
» The category of service data
» Home or Roam, initiating zone
» The number of access points
» The call direction: incoming or outgoing.

Of course the system can further trigger a normal message notification in addition to the friendly web notification mechanism in the technical solution of the invention. To this end, the notification server will maintain information of the e-mail address, the Instant Messaging (IM) address or the Multimedia Short Messaging Service/a Short Messaging Service (MMS/SMS) of the user. Then the notification message can be stored in the mobile handheld terminal as a record. For a pure data card device without supporting the notification of the Multimedia Short Messaging Service/the Short Messaging Service (MMS/SMS), the invention can provide the additional data card service notification that is transmitted from another mobile handheld terminal. For example the end user is provided with the data card service and the mobile handheld terminal, and the end user can acquire the data card service usage notification from his mobile device.

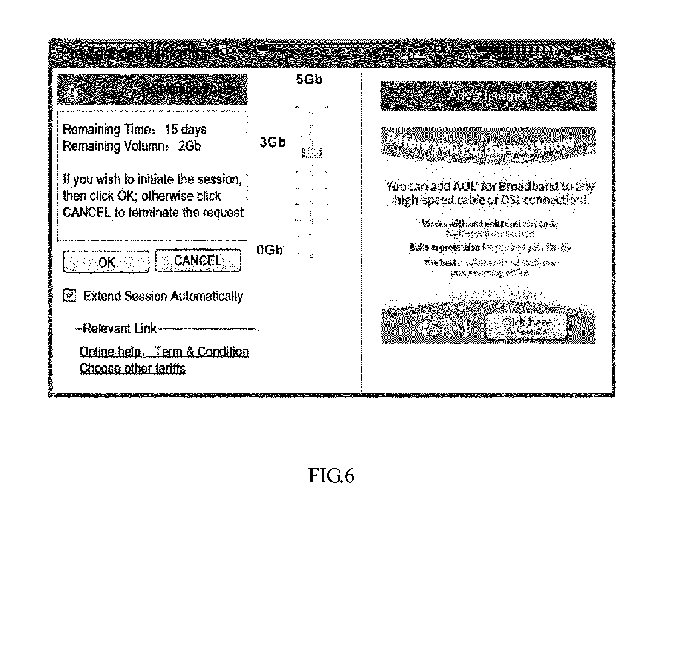

Fig.6 illustrates a schematic diagram of a web notification page for notifying account information, which is displayed at a user equipment according to an alternative embodiment of the invention. As illustrated, the mobile operator can further provide some web advertisements alongside a space of the foregoing conventional notification and user interaction operations. The types of advertisements provided on the webpage are based upon the contract agreement between the end user and the operator. For example, if the end user agrees on accepting an advertisement in the additional space of the web notification page, then the operator can provide some data services with a bonus/discount.

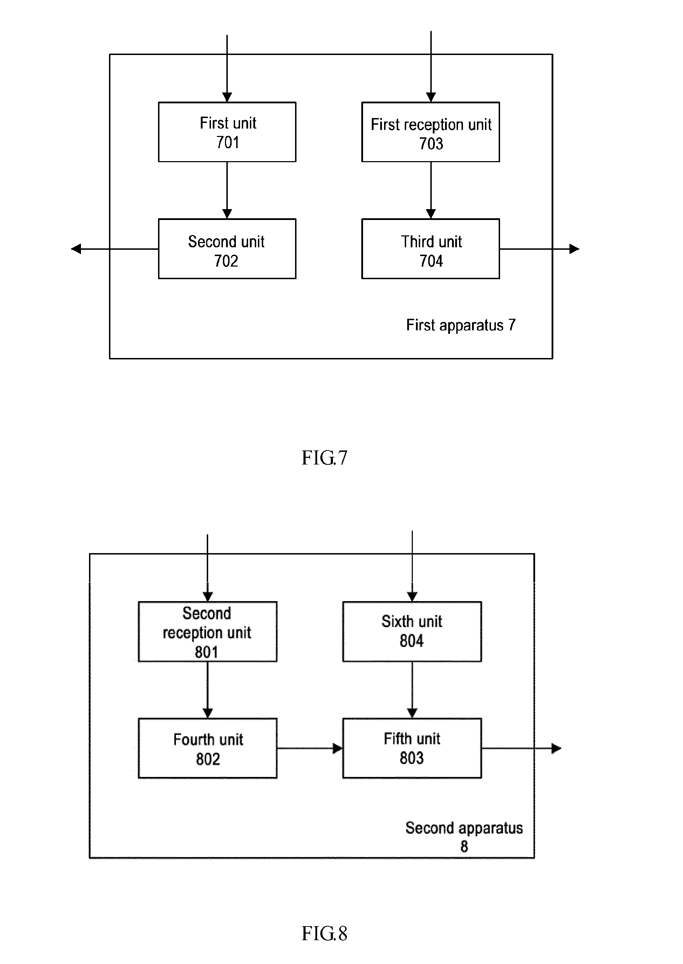

Referring to Fig.7, it illustrates a block diagram of a first apparatus, in an online charging device, for notifying account information of a data-type-oriented user equipment according to an embodiment of the invention, and the first apparatus 7 is typically arranged in the online charging device 6 illustrated in Fig.1 and includes:

A first unit 701 is for determining for each user whether the user satisfies a predetermined condition. Taking Fig.2 as an example, the function of the first unit 701 corresponds to the foregoing description of Steps S202 and S203; and

A second unit 702 is for, if the user satisfies the predetermined condition, then transmitting an activation command to a packet data network gateway to which a user equipment of the user belongs so that the packet data network activates account information notification control information for the user, and this corresponds to the foregoing description of Step S203;

Wherein the account information notification control information includes the network address of a web notification server; and

The first apparatus 7 further includes:

A first receiving unit 703 is for receiving an account information request from the web notification server, the account information request being used for requesting account information of the user, and this corresponds to the foregoing Step S208; and

A third unit 704 is for providing the web notification server with the account information of the user, and this corresponds to the foregoing Step S209.

Specifically, the first unit 701 determines that a predetermined condition is satisfied when a user satisfies at least one of the following conditions: - the user equipment of the user requests a connection to the packet data network gateway in an initialization process; - the amount of data traffic consumed by the user in a past first duration is above or equal to a first predetermined threshold; and - the amount of data traffic consumed by the user in a past second duration is above or equal to a second predetermined threshold.

Furthermore the first unit 701 is further for, when the predetermined condition is satisfied because the user equipment of the user is connected to the packet data network gateway in the initialization process or the amount of data traffic consumed by the user in the past first duration is above or equal to the first predetermined threshold,, determining whether the web notification server reports its completion of an operation of notifying the account information to the use. Taking Fig.2 as an example, this corresponds to Step S213 and the relevant steps. The second unit 702 is further for, if the web notification server reports its completion of the operation of notifying the account information to the user, then transmitting a deactivation command to the packet data network gateway so that the packet data network gateway deactivates the account information notification control information for the user, and this corresponds to Step S214.

Furthermore the account information notification control information corresponds to a first set of data services, and after the packet data network gateway activates the account information notification control information for the user, if the user requests an access to any of data services in the first set of data services, then the packet data network gateway will control the user equipment of the user to be connected to the web notification server to perform a web-based account information notification.

Referring to Fig.8, it illustrates a block diagram of a second apparatus, in a packet data network gateway, for notifying account information of a data-type-oriented user equipment according to an embodiment of the invention. As illustrated, the second apparatus 8 includes:

A second receiving unit 801 is for receiving an activation command from an online charging device. Taking Fig.2 as an example, this corresponds to Step S203;

A fourth unit 802 is for activating account information notification control information for a user indicated in the activation command, wherein the account information notification control information includes a network address of a web notification server. This corresponds to the operation after the message is received in Step S203 of Fig.2;

A fifth unit 803 is for controlling a user equipment of the user to be connected with the web notification server to perform a web-based account information notification, and this corresponds to Step S206 of Fig.2.

Furthermore the information notification control information further corresponds to a first set of data services, and the second apparatus 8 further includes: a sixth unit 804 for determining whether a data service access request message from the user equipment of the user is received, the data service access request message being used for requesting an access to at least one of data services in the first set of data services; and the fifth unit 803 further for, if the data service access request message is received, then controlling the user equipment of the user to be connected with the web notification server to perform the web-based account information notification.

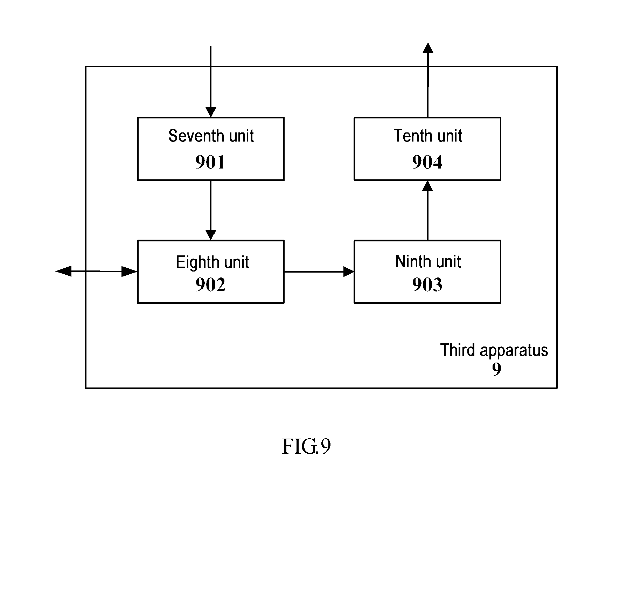

Referring to Fig.9, it illustrates a block diagram of a third apparatus, in a web notification server, for notifying account information of a data-type-oriented user equipment according to an embodiment of the invention. The third apparatus 900 includes: a seventh unit 901 for determining a user for which web-based account information notification is needed to be performed, and this corresponding to Step S207; an eighth unit 902 for acquiring account information of the user from an online charging control device, and this corresponding to Steps S207-S209 illustrated in Fig.2; a ninth unit 903 for generating a web notification page, the web notification page including the account information of the user; and a tenth unit 904 for transmitting the web notification page to the user equipment of the user. Wherein the operations of the ninth and tenth units correspond to Step S210 illustrated in Fig.2.

Other relationships between the respective units in the foregoing first to third apparatuses and the flow chart of the steps can be apparent upon review of the description.

It will be apparent to those skilled in the art that the invention will not be limited to the details of the foregoing illustrative embodiments but can be embodied in other specific forms without departing from the spirit or essential principle of the invention. Therefore the embodiments shall be construed in any aspect as illustrative but not limiting and the scope of the invention will be defined by the appended claims but not the foregoing description. Thus it is intended to encompass in the invention all the modifications falling into the meaning and scope of equivalents of the claims. Any reference numerals in the claims shall not be taken as limiting the claims where they appear. Furthermore apparently the term "comprise" will not preclude another element(s) or step(s), and a singular form will not preclude a plural form. A plurality of elements or devices stated in a system claim can alternatively be embodied as a single element or device in software or hardware. The terms "first", "second", etc., will be used to represent a name but not any specific order.

## Claims

1. A method, in an online charging device, of notifying account information of a data-type-oriented user equipment, the method comprising the steps of:
a. determining for each user whether the user satisfies a predetermined condition; and
b. if the user satisfies the predetermined condition, transmitting an activation command to a packet data network gateway to which a user equipment of the user belongs so that the packet data network gateway activates account information notification control information for the user,
wherein the account information notification control information includes a network address of a web notification server; and
the method further comprises the steps of:
- receiving an account information request from the web notification server, the account information request being used for requesting account information of the user; and
- providing the web notification server with the account information of the user.

2. The method according to claim 1, wherein the step a comprises:
determining that the predetermined condition is satisfied when a user satisfies at least one of the following conditions:
- the user equipment of the user requests a connection to the packet data network gateway in an initialization process;
- the amount of data traffic consumed by the user in a past first duration is above or equal to a first predetermined threshold; and
- the amount of data traffic consumed by the user in a past second duration is above or equal to a second predetermined threshold.

3. The method according to claim 2, wherein when the predetermined condition is satisfied because the user equipment of the user is connected to the packet data network gateway in the initialization process or the amount of data traffic consumed by the user in the past first duration is above or equal to the first predetermined threshold, after the step of controlling the user equipment to be connected with a web notification server to perform a web-based account information notification, the method further comprises the steps of:
determining whether the web notification server reports that it completes an operation of notifying the account information to the user; and
if the web notification server reports that it completes the operation of notifying the account information to the user, transmitting a deactivation command to the packet data network gateway so that the packet data network gateway deactivates the account information notification control information for the user.

4. The method according to claim 1, wherein the account information notification control information corresponds to a first set of data services, and after the packet data network gateway activates the account information notification control information for the user, if the user requests an access to any of data services in the first set of data services, the packet data network gateway will control the user equipment of the user to be connected to the web notification server to perform a web-based account information notification.

5. A method, in a packet data network gateway, of notifying account information of a data-type-oriented user equipment, the method comprising the steps of:
A. receiving an activation command from an online charging device;
B. activating account information notification control information for a user indicated in the activation command, wherein the account information notification control information includes a network address of a web notification server; and
D. controlling a user equipment of the user to be connected with the web notification server to perform a web-based account information notification.

6. The method according to claim 5, wherein the account information notification control information further corresponds to a first set of data services, and after the step B and before the step D, the method further comprises the step of:
C. determining whether a data service access request message from the user equipment of the user is received, the data service access request message being used for requesting an access to at least one of data services in the first set of data services; and
the step D further comprises the step of:
- if the data service access request message is received, controlling the user equipment of the user to be connected with the web notification server to perform the web-based account information notification.

7. A method, in a web notification server, of notifying account information of a data-type-oriented user equipment, the method comprising the steps of:
i. determining a user for which a web-based account information notification is needed to be performed;
ii. acquiring account information of the user from an online charging control device;
iii. generating a web notification page, the web notification page including the account information of the user; and
iv. transmitting the web notification page to the user equipment of the user; and
v. notifying the online charging device about information about completion of the account information notification upon the completion of the account information notification performed for the user equipment of the user.

8. A first apparatus, in an online charging device, for notifying account information of a data-type-oriented to user equipment, the first apparatus comprising:
a first unit for determining for each user whether the user satisfies a predetermined condition; and
a second unit for, if the user satisfies the predetermined condition, then transmitting an activation command to a packet data network gateway to which a user equipment of the user belongs so that the packet data network gateway activates account information notification control information for the user,
wherein the account information notification control information includes a network address of a web notification server; and
the first apparatus further comprises:
a first receiving unit for receiving an account information request from the web notification server, the account information request being used for requesting account information of the user; and
a third unit for providing the web notification server with the account information of the user.

9. The first apparatus according to claim 8, wherein the first unit determines that the predetermined condition is satisfied when a user satisfies at least one of the following conditions:
- the user equipment of the user requests a connection to the packet data network gateway in an initialization process;
- the amount of data traffic consumed by the user in a past first duration is above or equal to a first predetermined threshold; and
- the amount of data traffic consumed by the user in a past second duration is above or equal to a second predetermined threshold.

10. The first apparatus according to claim 9, wherein the first unit is further for, when the predetermined condition is satisfied because the user equipment of the user is connected to the packet data network gateway in the initialization process or the amount of data traffic consumed by the user in the past first duration is above or equal to the first predetermined threshold,
determining whether the web notification server reports that it completes an operation of notifying the account information to the user; and
the second unit is further for, if the web notification server reports that it completes the operation of notifying the account information to the user, transmitting a deactivation command to the packet data network gateway so that the packet data network gateway deactivates the account information notification control information for the user.

11. The first apparatus according to claim 8, wherein the account information notification control information corresponds to a first set of data services, and after the packet data network gateway activates the account information notification control information for the user, if the user requests an access to any of data services in the first set of data services, the packet data network gateway will control the user equipment of the user to be connected to the web notification server to perform a web-based account information notification.

12. A second apparatus, in a packet data network gateway, for notifying account information of a data-type-oriented user equipment, the second apparatus comprising:
a second receiving unit for receiving an activation command from an online charging device;
a fourth unit for activating account information notification control information for a user indicated in the activation command, wherein the account information notification control information includes a network address of a web notification server; and
a fifth unit for controlling a user equipment of the user to be connected with the web notification server to perform a web-based account information notification.

13. The second apparatus according to claim 12, wherein the account information notification control information further corresponds to a first set of data services, and the second apparatus further comprises:
a sixth unit for determining whether a data service access request message from the user equipment of the user is received, the data service access request message being used for requesting an access to at least one of data services in the first set of data services; and
the fifth unit is further for, if the data service access request message is received, controlling the user equipment of the user to be connected with the web notification server to perform the web-based account information notification.

14. A third apparatus, in a web notification server, for notifying account information of a data-type-oriented user equipment, the third apparatus comprising:
a seventh unit for determining a user for which a web-based account information notification is needed to be performed;
an eighth unit for acquiring account information of the user from an online charging control device;
a ninth unit for generating a web notification page, the web notification page including the account information of the user; and
a tenth unit for transmitting the web notification page to the user equipment of the user; and
the tenth unit is further for notifying the online charging device about information about completion of the account information notification upon the completion of account information notification performed for the user equipment of the user.

15. The third apparatus according to claim 14, wherein the web notification page further comprises at least one of:
- contents for performing an interactive operation with the user; and
- contents for providing the user with a value-added service.
